# EUROPÄISCHE PATENTANMELDUNG

(11) **EP 4 180 182 A1**
(43) Veröffentlichungstag der Anmeldung: **17.05.2023**
(21) Anmeldenummer: 21207762.2
(22) Anmeldetag: 11.11.2021
(51) Int. Cl.: B25F 5/00

(54) **VERBINDUNGSAUFNAHME FÜR EINE KOMMUNIKATION ZWISCHEN EINER ERSTEN UND ZWEITEN SYSTEMKOMPONENTE**

(71) Anmelder: Hilti Aktiengesellschaft, 9494 Schaan (LI)
(72) Erfinder: Hauser, Klaus, 86830 Schwabmünchen (DE); Beckert, Benedikt, 86830 Schwabmünchen (DE)
(74) Vertreter: Hilti Aktiengesellschaft Corporate Intellectual Property

(57) **Zusammenfassung**

System enthaltend eine erste Systemkomponente und eine zweite Systemkomponente, wobei die erste Systemkomponente beispielsweise in Form einer Werkzeugmaschine oder einer Ladevorrichtung und die zweite Systemkomponente insbesondere in Form eines Akkumulators ausgestaltet ist, wobei der Akkumulator wahlweise wiederlösbar mit der Werkzeugmaschine oder Ladevorrichtung verbindbar ist.

Die erste Systemkomponente enthält wenigstens einen ersten Transceiver sowie einen zweiten Transceiver und die zweite Systemkomponente enthält wenigstens einen dritten Transceiver sowie einen vierten Transceiver, wobei der erste Transceiver sowie dritte Transceiver für eine drahtgebundene Übertragungseinrichtung einer ersten Datenmenge und der zweite Transceiver sowie vierte Transceiver für eine drahtlose Übertragungseinrichtung einer zweiten Datenmenge ausgestaltet sind.

## Beschreibung

Die vorliegende Erfindung betrifft ein System enthaltend eine erste Systemkomponente und eine zweite Systemkomponente, wobei die erste Systemkomponente beispielsweise in Form einer Werkzeugmaschine oder einer Ladevorrichtung und die zweite Systemkomponente insbesondere in Form eines Akkumulators ausgestaltet ist, wobei der Akkumulator wahlweise wiederlösbar mit der Werkzeugmaschine oder Ladevorrichtung verbindbar ist.

Moderne kabellose Werkzeugmaschinen, wie beispielsweise Bohrhämmer, Sägen, Schrauber, Schleifgeräte oder dergleichen, sind mit einem oder mehreren Akkumulatoren verbindbar, die zur Versorgung der Werkzeugmaschine mit elektrischer Energie dienen.

Mit Hilfe entsprechender Schnittstellen sind die Akkumulatoren sowohl mechanisch als auch elektrisch so mit der Werkzeugmaschine wiederlösbar so verbunden, dass die im Inneren des Akkumulators gespeicherte elektrische Energie zu der Werkzeugmaschine gelangen. Neben der mechanischen und elektrischen Verbindung zwischen einem Akkumulator und einer Werkzeugmaschine weisen derartige moderne Schnittstellen auch häufig eine Datenübertragungseinrichtung auf. Durch diese Datenübertragungseinrichtung können unterschiedliche Daten und Informationen in Form von elektrischen Signalen zwischen dem Akkumulator und der Werkzeugmaschine ausgetauscht werden.

Vor dem eigentlichen Daten- und Informationsaustausch ist eine initiale Verbindungsaufnahme bzw. ein Authentisieren, sogenannte Pairing, der beiden Kommunikationsteilnehmer notwendig, damit sichergestellt werden kann, dass nur berechtigte bzw. dafür vorgesehene Teilnehmer miteinander einen Datenaustausch betreiben können. Die durch den Stand der Technik bereits bekannten Vorrichtungen und Verfahren zur initialen Verbindungsaufnahme sind oftmals technisch komplex, störanfällig und/oder unsicher. Insbesondere bei der Verwendung von Bluetooth zur drahtlosen Datenübertragung kann es während des Pairings zweier Kommunikationsteilnehmer zu einem unbefugten Eindringen in die bevorstehende Daten- und Informationsaustausch und/oder zu einem Abhören (d.h. Ausspionieren) des Daten- und Informationsaustausch kommen.

Es ist somit Aufgabe der vorliegenden Erfindung das vorstehend beschriebene Problem zu lösen und ein System bereitzustellen, mit dem ein einfacher und vor allem sicherer Daten- und Informationsaustausch möglich ist.

Die Aufgabe wird gelöst durch den Gegenstand in Anspruch 1. Vorteilhafte Ausführungsformen sind in den Unteransprüchen aufgeführt.

Die Aufgabe wird ebenfalls gelöst durch ein System enthaltend eine erste Systemkomponente und eine zweite Systemkomponente, wobei die erste Systemkomponente beispielsweise in Form einer Werkzeugmaschine oder einer Ladevorrichtung und die zweite Systemkomponente insbesondere in Form eines Akkumulators ausgestaltet ist, wobei der Akkumulator wahlweise wiederlösbar mit der Werkzeugmaschine oder Ladevorrichtung verbindbar ist.

Erfindungsgemäß ist vorgesehen, dass die erste Systemkomponente wenigstens einen ersten Transceiver sowie einen zweiten Transceiver und die zweite Systemkomponente wenigstens einen dritten Transceiver sowie einen vierten Transceiver enthält, wobei der erste Transceiver sowie dritte Transceiver für eine drahtgebundene Übertragungseinrichtung einer ersten Datenmenge und der zweite Transceiver sowie vierte Transceiver für eine drahtlose Übertragungseinrichtung einer zweiten Datenmenge ausgestaltet sind.

Durch die Verwendung einer drahtgebundenen Übertragung kann die Möglichkeit eines unbefugten Eindringens in die bevorstehende Daten- und Informationsaustausch bzw. ein Abhören des Daten- und Informationsaustausch reduziert werden. Darüber hinaus kann durch die Verwendung einer drahtgebundenen Übertragungseinrichtung und einer drahtlosen Übertragungseinrichtung auf die Verwendung von zwei unterschiedlichen drahtlosen Übertragungseinrichtungen verzichtet werden.

Der Transceiver kann auch als Sendeempfänger bezeichnet werden. Es ist dabei jedoch auch möglich, dass der Transceiver in Form einer Sendeeinheit und einer Empfangseinheit ausgestaltet ist, wobei sowohl die Sendeeinheit und Empfangseinheit jeweils als separate Komponenten verwirklicht sind.

Der Akkumulator dient zur Versorgung der Werkzeugmaschine mit elektrischer Energie, wenn der Akkumulator und die Werkzeugmaschine miteinander verbunden sind. Des Weiteren kann der Akkumulator durch die Ladevorrichtung mit elektrischer Energie versorgt werden, wenn der Akkumulator und die Ladevorrichtung miteinander verbunden sind.

Der erste Transceiver sowie der dritte Transceiver sind so ausgestaltet und zueinander abgestimmt, dass Daten und Informationen in Form von Signalen durch eine drahtgebundene Übertragungseinrichtung zwischen dem ersten und dritten Transceiver ausgetauscht werden können. In einer beispielhaften Ausführung kann die drahtgebundene Übertragungseinrichtung in Form einer Leitung zwischen dem ersten und dritten Transceiver ausgestaltet sein. Gemäß einer alternativen Ausführung kann der erste und dritte Transceiver Bestandteil eines DatenBUS-Systems sein.

Gemäß einer vorteilhaften Ausgestaltung der vorliegenden Erfindung kann es möglich sein, dass die erste Datenmenge für eine erstmaligen Verbindungsaufnahme zwischen dem ersten Systempartner und dem zweiten Systempartner ausgestaltet ist. Die Vorgang der erstmaligen Verbindungsaufnahme kann auch als Pairing bezeichnet werden.

Der zweite Transceiver sowie der vierte Transceiver sind so ausgestaltet und zueinander abgestimmt, dass Daten und Informationen in Form von Signalen durch eine drahtlose Übertragungseinrichtung zwischen dem zweiten und vierten Transceiver ausgetauscht werden können.

Entsprechend einer vorteilhaften Ausgestaltung der vorliegenden Erfindung kann es möglich sein, dass die drahtlose Übertragungseinrichtung der zweiten Datenmenge sowie zweite Transceiver und vierte Transceiver auf Basis einer Bluetooth-Technologie ausgestaltet ist. Hierdurch kann auf einfache Art und Weise eine relativ große Menge an Daten und Informationen zwischen den Kommunikationsteilnehmern austauschen. Zu der zweiten Datenmenge gehört unter anderem der regelmäßig gesendete Ladezustand (SoC = State of Charge) oder Gesundheitszustand (SoH = State of Health) des Akkumulators.

Alternativ kann auch jede andere drahtlose Signalübertragung-Technologie bzw. Funktechnik für den Daten- und Informationsaustausch zwischen den Kommunikationsteilnehmern verwendet werden.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein System gemäß einer ersten Ausführungsform mit einer Werkzeugmaschine als erste Systemkomponente und einem mit der Werkzeugmaschine verbundenen Akkumulator als zweite Systemkomponente; und
- Figur 2: ein System gemäß einer zweiten Ausführungsform mit einer Ladevorrichtung als erste Systemkomponente und dem mit der Ladevorrichtung verbundenen Akkumulator als zweite Systemkomponente.

### Ausführungsbeispiele:

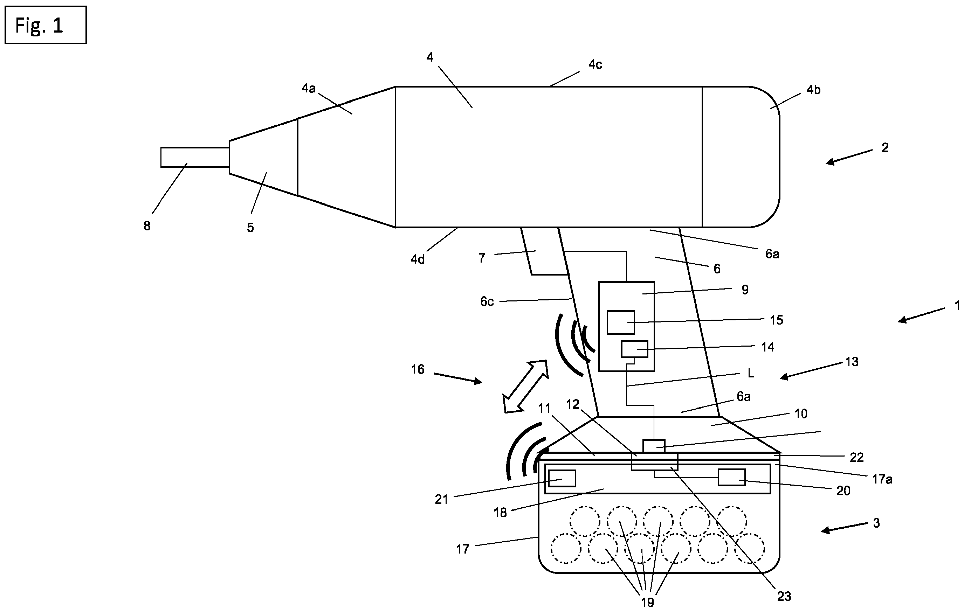

Figur 1 zeigt ein erfindungsgemäßes System 1 gemäß eines ersten Ausführungsbeispiels mit einer ersten Systemkomponente und einer zweiten Systemkomponente.

Gemäß dem ersten Ausführungsbeispiel ist dabei die erste Systemkomponente in Form einer Werkzeugmaschine 2 und die zweite Systemkomponente in Form eines Akkumulator 3 ausgestaltet. Die in Figur 1 dargestellte Werkzeugmaschine 2 ist dabei beispielsweise als Akku-Schrauber ausgestaltet. Die als Akkumulator 3 ausgestaltete zweite Systemkomponente ist in Figur 1 wiederlösbar mit der als Werkzeugmaschine 2 ausgestaltete erste Systemkomponente verbunden.

Alternativ kann die Werkzeugmaschine 2 auch als Bohrhammer, Bohrmaschine, Schleifgerät, Säge oder dergleichen ausgestaltet sein.

Wie ebenfalls in Figur 1 ersichtlich enthält die als Akku-Schrauber ausgestaltete Werkzeugmaschine 2 im Wesentlichen ein Werkzeuggehäuse 4, eine Werkzeugaufnahme 5 und einen Handgriff 6.

Der Handgriff 6 enthält wiederum ein oberes Ende 6a sowie ein unteres Ende 6b und dient zum Halten und Führen der Werkzeugmaschine 2 durch einen Anwender. An einer Vorderseite 6c des Handgriffs 6 ist ein Aktivierungsschalter 7 positioniert. Durch den Aktivierungsschalter 7 kann ein Anwender die Werkzeugmaschine 2 von einem Deaktivierungszustand in einen Aktivierungszustand einstellen. Der Aktivierungsschalter 6 enthält dabei ein Potentiometer (auch Poti genannt).

Der Anwender ist in den Figuren nicht gezeigt.

Das Werkzeuggehäuse 4 enthält wiederum ein vorderes Ende 4a, ein hinteres Ende 4b, eine Oberseite 4c und eine Unterseite 4d.

An dem vorderen Ende 4a des Werkzeuggehäuses 4 ist die Werkzeugaufnahme 5 positioniert. Die Werkzeugaufnahme 5 dient zum Aufnehmen und Halten eines Werkzeugs 8. In dem vorliegenden Ausführungsbeispiels ist das Werkzeug 8 als Bit (auch Schrauben-Bit bezeichnet) ausgestaltet.

Im Inneren des Werkzeuggehäuses 4 ist ein Antrieb, ein Getriebe, eine Steuerungseinrichtung 9 und eine Antriebswelle positioniert. Die Steuerungseinrichtung 9 enthält eine Speichereinheit zum Speichern und Bereitstellen von Daten und Informationen. Der Antrieb, das Getriebe sowie die Antriebswelle sind dabei so zueinander angeordnet, dass ein von dem Antrieb erzeugtes Drehmoment über das Getriebe auf die Antriebswelle übertragen werden kann. Die Antriebswelle ist wiederum mit der Werkzeugaufnahme 5 verbunden, sodass das Drehmoment auch auf die Werkzeugaufnahme 5 und schließlich auf das als Bit ausgestaltete Werkzeug 8 übertragen werden kann.

Der Antrieb ist als bürstenloser Elektromotor ausgestaltet. Alternativ kann der Antrieb aber auch als Elektromotor mit Kohlebürsten ausgestaltet sein.

Weder der Antrieb, das Getriebe noch die Antriebswelle sind in den Figuren dargestellt.

An der Unterseite 4d des Werkzeuggehäuses 4 ist das obere Ende 6a des Handgriffs 6 befestigt.

An dem unteren Ende 6b des Handgriffs 6 ist eine Fußvorrichtung 10 positioniert, die eine Werkzeugschnittstelle 11 enthält. Die Werkzeugschnittstelle 11 dient zum wiederlösbaren Verbinden des Akkumulators 3 mit der Werkzeugmaschine 2.

Die Werkzeugschnittstelle 11 enthält wiederum einen Pluskontakt, einen Minuskontakt sowie ein Kommunikationskontakt 12. Wie später noch im Detail beschrieben dient der Pluskontakt und der Minuskontakt zum Erzeugen eines Stromkreises, damit elektrische Energie von dem Akkumulator zu der Werkzeugmaschine 2 gelangen kann. Weder der Pluskontakt noch der Minuskontakt sind in den Figuren gezeigt.

Der Kommunikationskontakt 12 ist Bestandteil einer drahtgebundenen Übertragungseinrichtung 13 zum Austauschen von Daten und Informationen von der Werkzeugmaschine 2 mit einem anderen Kommunikationspartner (beispielsweise der Akkumulator 3).

Die Steuerungseinrichtung 9 ist in dem vorliegenden Ausführungsbeispiel im Inneren des Handgriffs 6 positioniert. Alternativ kann die Steuerungseinrichtung 9 auch an einer anderen geeigneten Stelle in oder an der Werkzeugmaschine 2 positioniert sein. Die Steuerungseinrichtung 9 dient zum Steuern und Regeln der unterschiedlichen Funktionen der Werkzeugmaschine 2.

Des Weiteren enthält die Steuerungseinrichtung 9 einen ersten Transceiver 14 und einen zweiten Transceiver 15.

Der erste Transceiver 14 ist Bestandteil der drahtgebundenen Übertragungseinrichtung 13 zum Austauschen von Daten und Informationen der Werkzeugmaschine 2 mit einem anderen Kommunikationspartner. Hierzu ist der erste Transceiver 14 durch eine Leitung mit dem Kommunikationskontakt der Werkzeugmaschine 2 so verbunden, dass Daten und Informationen in Form von Signalen zwischen dem ersten Transceiver 14 und dem Kommunikationskontakt der Werkzeugmaschine 2 ausgetauscht werden können.

Der zweite Transceiver 15 ist wiederum Bestandteil einer drahtlosen Übertragungseinrichtung 16 zum Austauschen von Daten und Informationen der Werkzeugmaschine 2 mit einem anderen Kommunikationspartner.

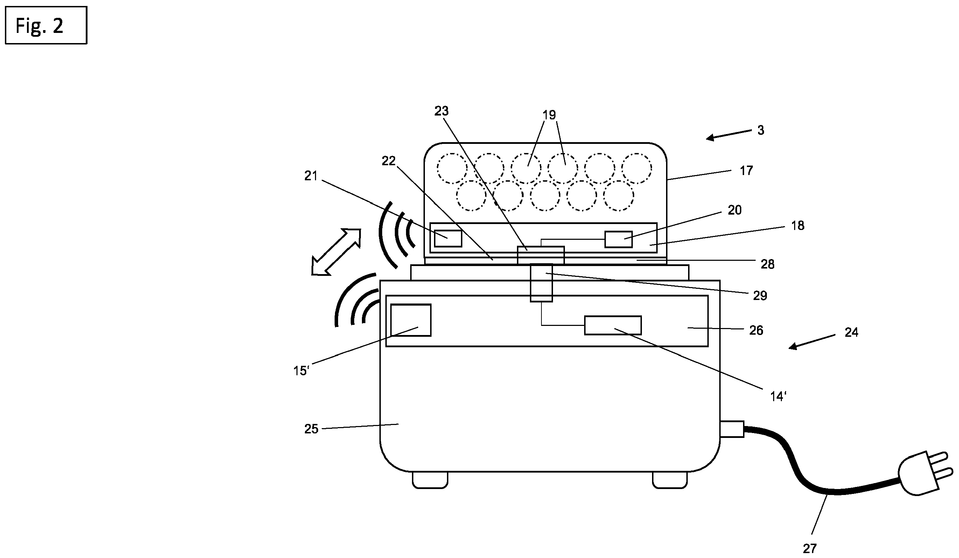

Der in Figur 1 und 2 dargestellt Akkumulator 3 enthält gemäß dem dargestellten Ausführungsbeispiel im Wesentlichen ein Akkugehäuse 17, eine Steuereinrichtung 18 und eine Anzahl eines Energiespeicherzellen 19 (auch Akku-Zellen genannt).

Die Steuereinrichtung 18 enthält eine Speichereinheit zum Speichern und Bereitstellen von Daten und Informationen.

Die Energiespeicherzellen 19 sind im Inneren des Akkugehäuses 17 positioniert und dienen zum Aufnehmen, Speichern sowie Bereitstehen einer elektrischen Energie. Jede einzelne Energiespeicherzelle 19 ist über eine entsprechende Leitung L mit der Steuereinrichtung 18 verbunden. Darüber hinaus sind die Energiespeicherzellen 19 mit dem Pluskontakt und dem Minuskontakt des Akkumulators 3 verbunden, sodass die in den Energiespeicherzelle 19 gespeicherte elektrische Energie an dem Pluskontakt und Minuskontakt abgreifbar ist.

Die Steuereinrichtung 18 dient zum Steuern und Regeln der unterschiedlichen Funktionen des Akkumulators 3. Des Weiteren enthält die Steuereinrichtung 18 einen dritten Transceiver 20 und einen vierten Transceiver 21.

Der dritte Transceiver 20 des Akkumulators 3 ist Bestandteil der drahtgebundenen Übertragungseinrichtung 13 zum Austauschen von Daten und Informationen des Akkumulators 3 mit einem anderen Kommunikationspartner. Der vierte Transceiver 21 des Akkumulators 3 ist wiederum Bestandteil der drahtlosen Übertragungseinrichtung 16 zum Austauschen von Daten und Informationen von dem Akkumulator 3 mit einem anderen Kommunikationspartner (beispielsweise die Werkzeugmaschine 2 oder die Ladevorrichtung 24).

Das Akkugehäuse 17 enthält an einer Oberseite 17a eine Akkuschnittstelle 22, welche zu der Werkzeugschnittstelle 11 korrespondierend ausgestaltet ist und dazu dient, den Akkumulator 3 mit der Werkzeugmaschine 2 wiederlösbar zu verbinden. Die Akkuschnittstelle 22 enthält wiederum einen Pluskontakt, einen Minuskontakt sowie ein Kommunikationskontakt 23. Zum Verbinden der Akkumulator 3 mit der Werkzeugmaschine 2 wird die Akkuschnittstelle 22 mit der Werkzeugschnittstelle 11 so in Kontakt gebracht, dass die jeweiligen Pluskontakt, Minuskontakte und Kommunikationskontakte 23 miteinander in Verbindung stehen. Durch die Kontaktierung der Pluskontakte und Minuskontakte kann ein Stromkreis so geschlossen werden, dass elektrische Energie von den Energiespeicherzellen 19 des Akkumulators 3 über die jeweiligen Schnittstellen 11, 22 zu der Werkzeugmaschine gelangen kann.

Dadurch, dass der Kommunikationskontakt 12 der Werkzeugmaschine 2 sowie der Kommunikationskontakt 23 des Akkumulators 3 in Verbindung gebracht werden, können Daten und Informationen in Form von Signalen zwischen dem Akkumulator 3 und der Werkzeugmaschine 2 ausgetauscht werden.

Figur 2 zeigt ein erfindungsgemäßes System gemäß eines zweiten Ausführungsbeispiels mit einer ersten Systemkomponente und einer zweiten Systemkomponente. Die erste Systemkomponente ist in Form einer Ladevorrichtung 24 und die zweite Systemkomponente ist in Form des Akkumulators 3 ausgestaltet.

Die Ladevorrichtung 24 dient zum Versorgen eines angeschlossenen Akkumulators 3 mit elektrischer Energie und enthält dabei im Wesentlichen ein Ladevorrichtungsgehäuse 25, eine Steuervorrichtung 26 und eine Energieversorgung 27.

Die Steuervorrichtung 26 enthält eine Speichereinheit zum Speichern und Bereitstellen von Daten und Informationen.

Des Weiteren enthält das Ladevorrichtungsgehäuse 25 an einer Oberseite 25a eine Ladevorrichtungsschnittstelle 28, die zum wiederlösbaren Verbinden der Ladevorrichtung 24 mit dem Akkumulator 3 dient.

Die Ladevorrichtungsschnittstelle 28 enthält wiederum einen Pluskontakt, einen Minuskontakt sowie ein Kommunikationskontakt 29. Der Pluskontakt und der Minuskontakt dienen zum Erzeugen eines Stromkreises damit elektrische Energie von der Ladevorrichtung 24 zu dem Akkumulator 3, insbesondere zu den Energiespeicherzellen 19, gelangen kann. Weder der Pluskontakt noch der Minuskontakt sind in den Figuren gezeigt.

Der Kommunikationskontakt 29 der Ladevorrichtung 24 ist Bestandteil einer drahtgebundenen Übertragungseinrichtung 13 zum Austauschen von Daten und Informationen von der Ladevorrichtung 24 mit einem anderen Kommunikationspartner (beispielsweise der Akkumulator 3).

Die Steuervorrichtung 26 dient zum Steuern und Regeln der verschiedenen Funktionen der Ladevorrichtung 24. Darüber hinaus enthält die Steuervorrichtung 26 einen ersten Transceiver 14'und zweiten Transceiver 15'.

Der erste Transceiver 14' ist Bestandteil einer drahtgebundenen Übertragungseinrichtung 13 zum Austauschen von Daten und Informationen der Ladevorrichtung 24 mit einem anderen Kommunikationspartner. Hierzu ist der erste Transceiver 14' durch eine Leitung mit dem Kommunikationskontakt 29 der Ladevorrichtung 24 so verbunden, dass Daten und Informationen in Form von Signalen zwischen dem ersten Transceiver 14' und dem Kommunikationskontakt 29 der Ladevorrichtung 24 ausgetauscht werden können.

Wie in Figur 2 erkennbar ist die Energieversorgung 27 in Form eines Stromkabels ausgestaltet. Mit Hilfe der als Stromkabel ausgestalteten Energieversorgung 27 kann die Ladevorrichtung 24 an ein Stromnetz (d.h. Steckdose) angeschlossen werden.

Alternativ kann die Ladevorrichtung 24 auch in Form einer mobilen Energieversorgungseinrichtung verwirklicht sein. Derartige mobile Energieversorgungseinrichtungen können auch als Powerbank bezeichnet werden.

Im vorliegenden Ausführungsbeispiel basiert die drahtlose Übertragungseinrichtung 16 zum Austauschen von Daten und Informationen auf einer Bluetooth-Technologie.

Wenn eine Kommunikation, d.h. ein Austausch von Daten und Informationen in Form von Signalen, zwischen der ersten Systemkomponente 2, 24 und der zweiten Systemkomponente 3 stattfinden soll, ist zunächst eine initiale Verbindungsaufnahme bzw. ein Authentisieren, sogenanntes Pairing, der beiden Systemkomponenten 2, 3, 24 (bzw. Kommunikationsteilnehmer) notwendig. Das Pairing dient zum Bestimmen, ob die beiden Kommunikationsteilnehmer überhaupt zueinander passen und miteinander Daten austauschen dürfen bzw. können.

Für die initiale Verbindungsaufnahme (d.h. Pairing) wird von dem ersten Transceiver 14, 14' der ersten Systemkomponente 2, 24 eine erste Datenmenge über die drahtgebundene Übertragungseinrichtung 13 an den dritten Transceiver 20 der zweiten Systemkomponente 3 gesendet. Nach einer erfolgreichen Verbindungsaufnahme (d.h. Pairing) sind die beiden Systemkomponenten 2, 3, 24 miteinander gekoppelt, sodass eine Kommunikation mit einem Daten- und Informationsaustausch zwischen den beiden Systemkomponenten 2, 3, 24 durchgeführt werden kann.

Ein Daten- und Informationsaustausch mit großen Mengen an Signalen findet anschließend über die drahtlose Übertragungseinrichtung zwischen dem zweiten Transceiver 14, 14' der ersten Systemkomponente 2, 24 und dem vierten Transceiver 21 der zweiten Systemkomponente 3 statt.

### Bezugszeichenliste

- 1: System
- 2: Werkzeugmaschine
- 3: Akkumulator
- 4: Werkzeuggehäuse
- 4a: vorderes Ende des Werkzeuggehäuses
- 4b: hinteres Ende des Werkzeuggehäuses
- 4c: Oberseite des Werkzeuggehäuses
- 4d: Unterseite des Werkzeuggehäuses
- 5: Werkzeugaufnahme
- 6: Handgriff
- 6a: oberes Ende des Handgriffs
- 6b: unteres Ende des Handgriffs
- 6c: Vorderseite des Handgriffs
- 7: Aktivierungsschalter
- 8: Werkzeug
- 9: Steuerungseinrichtung
- 10: Fußvorrichtung
- 11: Werkzeugschnittstelle
- 12: Kommunikationskontakt der Werkzeugmaschine
- 13: drahtgebundene Übertragungseinrichtung
- 14, 14': erster Transceiver
- 15, 15': zweiter Transceiver
- 16: drahtlose Übertragungseinrichtung
- 17: Akkugehäuse
- 17a: Oberseite des Akkugehäuses
- 18: Steuereinrichtung
- 19: Energiespeicherzelle
- 20: dritter Transceiver
- 21: vierter Transceiver
- 22: Akkuschnittstelle
- 23: Kommunikationskontakt des Akkumulators
- 24: Ladevorrichtung
- 25: Ladevorrichtungsgehäuse
- 26: Steuervorrichtung
- 27: Energieversorgung der Ladevorrichtung
- 28: Ladevorrichtungsschnittstelle
- 29: Kommunikationskontakt der Ladevorrichtung
- L: Leitung

## Patentansprüche

1. System (1) enthaltend eine erste Systemkomponente (2, 24) und eine zweite Systemkomponente (3), wobei die erste Systemkomponente (2, 24) beispielsweise in Form einer Werkzeugmaschine oder einer Ladevorrichtung und die zweite Systemkomponente (3) insbesondere in Form eines Akkumulators ausgestaltet ist, wobei der Akkumulator wahlweise wiederlösbar mit der Werkzeugmaschine oder Ladevorrichtung verbindbar ist
**dadurch gekennzeichnet, dass** die erste Systemkomponente (2, 24) wenigstens einen ersten Transceiver (14, 14') sowie einen zweiten Transceiver (15, 15') und die zweite Systemkomponente (3) wenigstens einen dritten Transceiver (20) sowie einen vierten Transceiver (21) enthält, wobei der erste Transceiver (14, 14') sowie dritte Transceiver (20) für eine drahtgebundene Übertragungseinrichtung (13) einer ersten Datenmenge und der zweite Transceiver (15, 15') sowie vierte Transceiver (21) für eine drahtlose Übertragungseinrichtung (16) einer zweiten Datenmenge ausgestaltet sind.

2. System (1) nach Anspruch 1,
**dadurch gekennzeichnet, dass** die erste Datenmenge für eine erstmaligen Verbindungsaufnahme zwischen dem ersten Systempartner (2, 24) und dem zweiten Systempartner (3) ausgestaltet ist.

3. System (1) nach Anspruch 1 oder 2,
**dadurch gekennzeichnet, dass** die drahtlose Übertragungseinrichtung (16) der zweiten Datenmenge sowie zweite Transceiver (15, 15') und vierte Transceiver (21) auf Basis einer Bluetooth-Technologie ausgestaltet ist.
